# EUROPÄISCHE PATENTSCHRIFT

(11) **EP 1 391 147 B1**
(45) Veröffentlichungstag und Bekanntmachung des Hinweises auf die Patenterteilung: **30.11.2005**
(21) Anmeldenummer: 03012526.4
(22) Anmeldetag: 02.06.2003
(51) Int. Cl.: A01C 7/20, A01C 5/06, A01B 49/06

(54) **Säschiene mit mehreren gestaffelt angeordneten Säscharen mit nachgeordneten Druckrollen**
Sowing share with coulters arranged in rows followed by pressing wheels
Soc d'ensemencement avec des socs de semoir échelonnés suivis de rouleaux de pression

(30) Priorität: 19.08.2002 DE 10238685
(43) Veröffentlichungstag der Anmeldung: 25.02.2004
(73) Patentinhaber: Kerner, Josef, D-89344 Aislingen (DE)
(72) Erfinder: Kerner, Josef, D-89344 Aislingen (DE)
(74) Vertreter: Gallo, Wolfgang

(56) Entgegenhaltungen:
- EP-A- 0 974 252
- EP-A- 1 060 649
- WO-A-85/05246
- DE-A- 19 731 862
- DE-C- 188 347

## Beschreibung

Die Erfindung betrifft eine Säschiene, an der mehrere gestaffelt angeordnete Säscharen mit jeweils nachgeordneten Druckrollen gelenkig angeordnet sind, wobei die Säschiene selbst über einen Querrahmen mit dem Saatgutbehälter bzw. mit einem vorauslaufenden Gerät oder Fahrwerk verbunden ist.

Die Säscharen können als Zinkenscharen ausgebildet sein, häufig haben sie aber die Form von Scheibenscharen. Diese Säscharen dienen dazu, im Ackerboden jeweils eine Furche zu formen, in welche das Saatgut abgelegt wird. Jede Säschar ist an einem rohr- oder stangenartigen Träger angeordnet, der mit seinem vorderen Ende gelenkig an einer Querachse der Säschiene befestigt ist und hinten eine der Säschar nachlaufende Druckrolle trägt. Da die Säschar zwar bei Steinen oder dergleichen im Ackerboden auslenken können muß, aber nicht schon bei jeder kleinen Bodenunebenheit, jedem Strohbüschel oder jeder Dichteschwankung im Boden ausweichen soll, wird sie durch entsprechende Federbelastung ihres Trägers gegen den Boden vorgespannt. Die nachlaufende Druckrolle hat dabei die Aufgabe, die Abstützung am Boden vorzunehmen und damit die Arbeitstiefe der Säschar entsprechend der gewählten Einstellung festzulegen. Gleichzeitig bringt die Druckrolle den Nebeneffekt, daß das Saatgut in den Boden eingedrückt und die Furche in deren Bodenbereich auch wieder zugedrückt wird.

Über die Arbeitsbreite der Säschiene ist eine Mehrzahl von Säscharen entsprechend dem gewünschten Furchenabstand verteilt angeordnet. Damit nicht durch sich aufhäufende Erdkrümel oder Stroh oder dergleichen eine Verstopfung zwischen in Richtung der Arbeitsbreite benachbarten Säscharen auftritt, sind die Säscharen in Längsrichtung, d. h. in Arbeitsrichtung, gestaffelt angeordnet, beispielsweise in zwei Reihen, so daß die jeweils benachbarten Säscharen jeweils auch in Längsrichtung versetzt sind und dadurch verstopfungsfreie große Lücken zwischen den Säscharen gebildet sind.

Die Tiefeneinstellung der Säscharen erfolgt meist dadurch, daß die ganze Säschiene bzw. der Scharrahmen höhenverstellt (z. B. DE 299 10 414 U1, DE 196 44 751) oder um eine Querachse verschwenkt, was sehr einfach und schnell möglich ist, wohingegen die ebenfalls bekannte Tiefeneinstellung über eine Verstellung der Druckrollen gerade bei größeren Arbeitsbreiten sehr arbeitsintensiv ist.

Sind die Scharträger der Säscharen an einer gemeinsamen Querachse der Säschiene angelenkt, müssen die Scharträger wegen der gestaffelten Anordnung der Säscharen unterschiedliche Längen haben. Hierbei ist allerdings die Tiefeneinstellung der Säscharen ungleichmäßig, da bei den langen und kurzen Scharträgern das Längenverhältnis von Anlenkpunkt zu Säschar zur Druckrolle ungleich ist. Wollte man das Längenverhältnis gleich machen, ergäbe sich eine zu große Baulänge. Außerdem ist bei Aufhängung aller Säscharträger an nur einer Querachse bei Verwendung einer Gummilagerung zur Vorspannungserzeugung die Lagerungsbreite begrenzt und dadurch die Seitenführungsstabilität besonders bei Einscheibenscharen nicht ausreichend gegeben. Säschienen, bei denen die Scharträger an mehreren hintereinander liegenden Querachsen angelenkt sind, haben hingegen den Nachteil, daß je nach Tiefeneinstellung der Säscharen die Schareinheiten beim Ausheben der Sämaschine bis zum Tiefenbegrenzungsanschlag sich unterschiedlich weit nach unten absenken und aufgrund des geringen Freiraums zum Boden oft Schäden entstehen, was nur durch eine zusätzliche aufwendige Verstellung der Tiefenanschläge vermieden werden kann.

Aus der WO 85/05 246 A1 ist ein Sägerät bekannt, das zum Anhängen mittels einer Deichsel an einen Traktor oder dergleichen ausgebildet ist Dieses bekannte Sägerät weist zwei hintereinander und gestaffelt angeordnete Reihen von Scheibensäscharen und eine hinter diesen angeordnete Reihe von als Rädern ausgebildeten Druckrollen auf. Ein Saatgutbehälter ist über den beiden Scheibenscharreihen angeordnet. Die Schelbensäscharen jeder Reihe sind über einen eigenen Arm elastisch auslenkbar mit einer der jeweiligen Säscharreihe zugeordneten Querachse verbunden. Die Druckrollen sind wiederum jeweils über einen Arm mit einer eigenen Querachse verbunden, und die Druckrollenreihe als Ganzes ist mittels eines Hydraulikzylinders höhenverstellbar, wobei dadurch die Tiefeneinstellung der Säscharen erfolgt. Eine Besonderheit bei dem bekannten Sägerät liegt darin, daß eine Zuordnung zwischen jeweils zwei gestaffelt hintereinander angeordneten Säscharen und einer Druckrolle besteht, wobei ein Ausgleichsgestänge die Druckrolle mit jeweils einem Säschar der vorderen Reihe und einem Säschar der hinteren Reihe verbindet. Diese Anordnung ist, abgesehen vom komplizierten Aufbau, vom Gegenstand der vorliegenden Erfindung allerdings insoweit verschieden, als die Erfindung sich auf Anbaugeräte besieht, nämlich auf Säschienen, die über einen Querrahmen und somit starr mit einem vorauslaufenden Gerät oder Fahrwerk wie beispielsweise Traktor verbunden sind.

Der Erfindung liegt, ausgehen von dem oben dargestellten Hintergrund, die Aufgabe zugrunde, eine Säschiene mit gestaffelt angeordneten Säscharen so auszubilden, daß sie einerseits einfach zu bedienen ist und andererseits eine genaue Tiefeneinstellung gewährleistet.

Diese Aufgabe wird gemäß der Erfindung durch die im Anspruch 1 angegebene Säschiene gelöst.

Vorteilhafte Ausgestaltungen der Erfindung sind Gegenstand der Unteransprüche.

Bei der erfindungsgemäßen Anordnung sind die Säschareinheiten mit ihren Scharträgern auf mindestens zwei quer zur Fahrtrichtung hintereinander verlaufenden Achsen angelenkt wobei diese Querachsen je nach Anwendungsfall auch höhenversetzt sein können. Der Abstand zwischen den beiden Querachsen in Arbeitsrichtung entspricht etwa dem Längsversatz der Säscharscheiben, so daß bei allen Säschareinheiten ein gleiches Längenverhältnis der Distanz vom Anlenkpunkt des Scharträgers zur Säschar und der Distanz von der Säschar zur zugeordneten Druckrolle gegeben ist. Die Säscharträger wirken alle mit einem gemeinsamen Tiefenbegrenzungsanschlag zusammen, wobei die an der hinteren Querachse angelenkten Scharträger mit einem Anschlagarm mit dem Tiefenbegrenzungsanschlag zusammenwirken, der etwa senkrecht oder geneigt verläuft, während die Scharträger, die an der vorderen Querachse angelenkt sind, mit einem horizontalen, geneigtem oder gewinkelten Anschlagarm mit dem Anschlag zusammenwirken. Der Anschlag ist so verstellbar, daß sich die Verstellung in gleicher Weise auf beide Gruppen von Scharträgern auswirkt. Durch diese Anordnung ist das Absenken der Scharträger beim Ausheben der Sämaschine auf das gleiche Maß begrenzt.

Die Erfindung wird nachstehend anhand von Ausführungsbeispielen unter Bezugnahme auf die anliegenden schematischen Zeichnungen mehr im einzelnen beschrieben. In den Zeichnungen zeigt:
- Fig. 1: in schematischer Seitenansicht eine Kombination aus Bodenbearbeitungsgerät und Sämaschine mit Rahmen, Walzenwerk, Saatgutbehälter, Säschiene und Schareinheiten,
- Fig. 2: eine vergrößerte Darstellung der Säschiene in Seitenansicht wie in Figur 1 mit Gummilagervorspannung der Schareinheiten,
- Fig. 3: eine Darstellung ähnlich Fig. 2 mit Federvorspannung der Schareinheiten, und
- Fig. 4: schematisch eine Anordnung zur Vorspannung der Gummilager bei der Anordnung nach Fig. 2.
- Fig. 5: eine Darstellung ähnlich Figur 2 eines abgewandelten Ausführungsbeispiels nach der Erfindung, und
- Fig. 6: ein noch weiteres Ausführungsbeispiel der Erfindung.

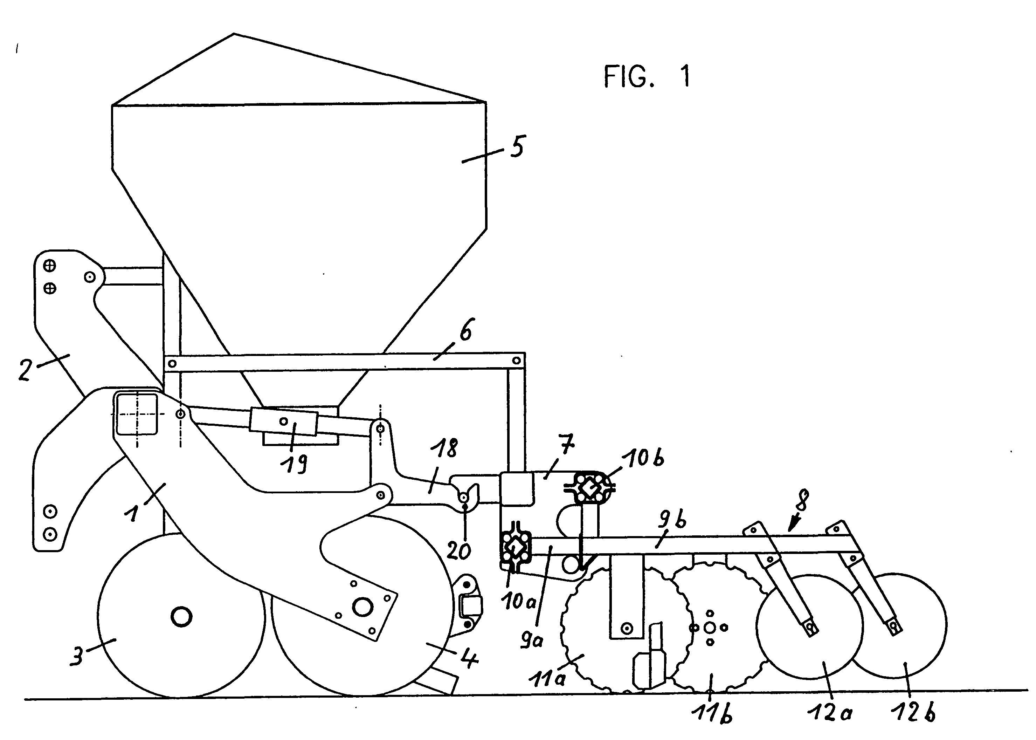

Figur 1 zeigt in schematisch vereinfachter Form eine Seitenansicht einer Kombination aus Bodenbearbeitungsgerät und Sämaschine zum Anbau an einen Ackerschlepper oder dergleichen. Die Kombination besteht aus einem Rahmen 1 mit Anbaumechanismus 2 sowie Räumscheiben 3 und einer aus Scheiben zusammengesetzten Walze 4, weiter aus einem auf dem Rahmen montierten Saatgutbehälter 5, einer am Rahmen über einen Gelenkrahmen 6 angebauten Säschiene 7, und einer Anzahl von über die Arbeitsbreite verteilten, jeweils gelenkig mit der Säschiene 7 verbunden Säschareinheiten 8.

Jede Säschareinheit 8 besteht aus einem Trägerrohr 9a bzw. 9b, das mit seinem vorderen Ende an einer Querachse 10a bzw. 10b der Säschiene 7 angelenkt ist, weiter aus einer als Scheibenschar ausgebildeten Säschar 11a bzw. 11b, und einer der Säschar nachgeordneten Druckrolle 12a bzw. 12b.

Wie man sieht, sind die Säscharen in zwei mit Längsabstand (bezogen auf die Länge der Sämaschine) angeordneten Reihen angeordnet, nämlich einer vorderen Reihe mit den Säscharen 11a und einer hinteren Reihe mit den Säscharen 11b. Die in Richtung der Arbeitsbreite aufeinanderfolgenden Säscharen sind jeweils abwechselnd als vordere Säschar 11 a und hintere Säschar 11b angeordnet, so daß also eine gestaffelte Anordnung der Säscharen über die Arbeitsbreite erzeugt wird, um Verstopfungen durch Erde, Strohreste und dergleichen zu verhindern, die auftreten würden, wenn alle Säscharen nebeneinander angeordnet wären und entsprechend kleine Abstände voneinander hätten.

Die beiden Querachsen 10a und 10b der Säschiene 7 sind, wie die Figuren 1 bis 3 sowie 5 und 6 zeigen, mit Längsabstand (in Richtung der Sämaschinenlänge) voneinander angeordnet. Bei der Ausführungsfrom nach den Figuren 1 bis 3 sind diese Querachsen 10a und 10b außerdem auch zueinander höhenversetzt in der Weise, daß die hintere Querachse 10b höher angeordnet ist als die vordere Querachse 10a. An der vorderen Querachse 10a sind die geradlinig verlaufenden Tragrohre 9a der vorderen Säscharen 11 a angelenkt, während an der hinteren höheren Querachse 10b die winkelförmig verlaufenden Tragrohre 9b der hinteren Säscharen 11b angelenkt sind.

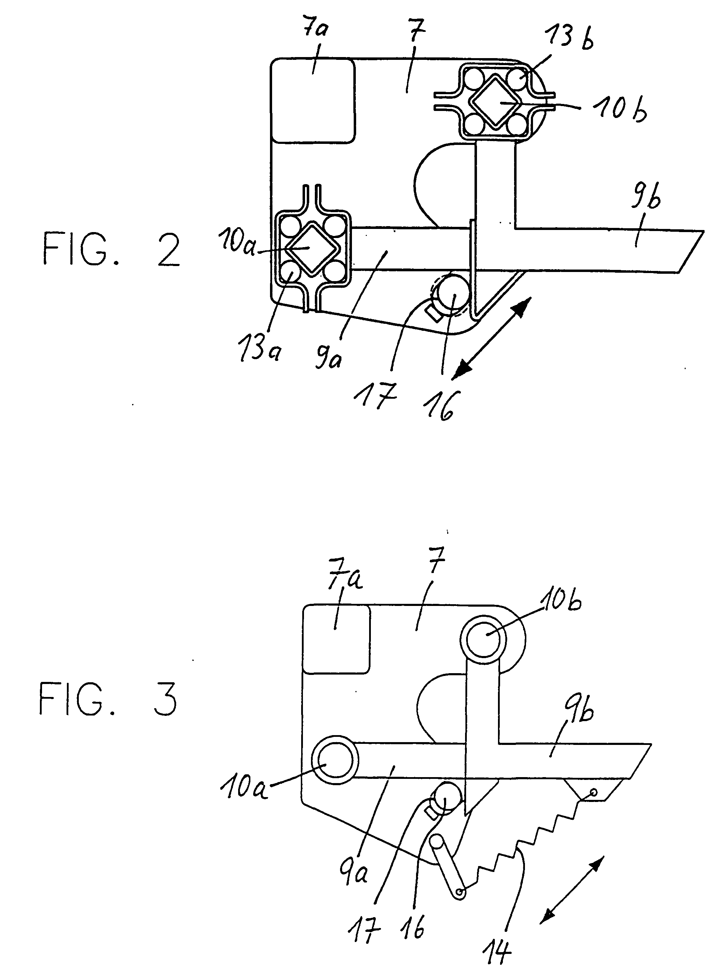

Außerdem sind die Säscharen alle nach unten vorgespannt. Dies geschieht gemäß den Figuren 2, 5 und 6 durch die Gummilager 13a bzw. 13b auf den Querachsen 10a bzw. 10b; gemäß Figur 3 geschieht dies durch Zugfedern 14, die zwischen der Säschiene und dem jeweiligen Tragrohr 9a bzw. 9b angeordnet sind. Damit wird jede Schareinheit mit Säschar 11a bzw. 11b und zugehöriger Druckrolle 12a bzw. 12b gegen den Boden vorgespannt, wobei die Abstützung auf den Boden durch die Druckrolle 12a bzw. 12b erfolgt.

Die Figuren 2 und 3 sowie 5 und 6 zeigen außerdem einen Tiefenbegrenzungsanschlag 16 an der Säschiene 7, der in Querrichtung über die ganze Säschiene verläuft und sämtlichen Tragrohren 9a und 9b gemeinsam zugeordnet ist. Dieser Anschlag 16 dient zum einen als Tiefenbegrenzung, so daß auch in weichen Bodenstellen sich die betreffende Säschar mit der Druckrolle nicht weiter absenken kann als bis zum Anliegen des Tragrohrs am Anschlag, und zum anderen dazu, beim Ausheben der Säschiene mit den Schareinheiten vom Boden die Tragrohre abzustützen, damit diese nicht aufgrund der auf sie wirkenden Vorspannung unbegrenzt nach unten ausschwenken. Dabei ist es wichtig, daß die Tragrohre 9a und 9b für die vorderen und hinteren Säscharen 11 a und 11b bis zum Wirksamwerden des Anschlags nur um das gleiche Maß abwärts ausschwenken können.

Das Zusammenwirken desselben Anschlags 16 sowohl mit den Tragrohren 9a der vorderen Säscharen 1a als auch mit dem Tragrohren 9b der hinteren Säscharen 11b wird auf folgende Weise erreicht:

Wie man insbesondere in den Figuren 2 und 3 sieht, können sich die geraden Tragrohre 9a der vorderen Säscharen 11a mit ihrer Unterseite direkt auf die Oberseite des Anschlags 16 auflegen. Bei den winkelförmig ausgebildeten Tragrohren 9b der hinteren Säscharen 11b ist der vertikale Schenkel der abgewinkelten Tragrohre etwas nach unten verlängert, so daß er wiederum mit dem Anschlag 16 zusammenwirken kann, wenn auch in bezüglich des Zusammenwirkens des Tragrohrs 9a mit dem Anschlag in einer um etwa 90° versetzten Richtung. In den Figuren 2, 3, 5 und 6 ist der Abstand der Tragrohre 9a und 9b in der Arbeitsstellung, das heißt bei in gleicher Tiefe auf dem Boden aufsitzenden Schareinheiten vom Anschlag 16 eine jeweils gleich große kleine Distanz. Wie man leicht sieht, ist bei Wahl gleicher Distanz der vorderen Querachse 10a und der hinteren oberen Querachse 10b jeweils vom Anschlag 16 eine geometrische Situation gegeben, daß dann bis zum Anliegen am Anschlag jeweils ein gleicher Drehwinkel vom entsprechende Teil des Tragrohrs durchlaufen wird und damit das Maß der Schwenkbewegung an der Säschar und an der Druckrolle jeweils etwa gleich ist. Bei der exakten Auslegung und Abstimmung kann auch noch der Längsversatz der Säscharen 11 a und 11b voneinander bzw. der Druckrollen 12a bzw. 12b voneinander berücksichtigt werden, so daß bei jeder Tiefeneinstellung sich die beiden Reihen von Säscharen in der gleichen Höhe befinden, ebenso die beiden Reihen von Druckrollen.

Aus den Figuren 2, 3, 5 und 6 ist auch ein Führungsschlitz 17 in der Säschiene erkennbar, in welchem der Anschlag 16 in schräger Richtung verstellt werden kann, so daß sich sein Abstand von den Tragrohren 9a und den Tragrohren 9b immer in der gleichen Weise verändert, diese Abstände also unabhängig von der Absolutgröße immer den gleichen Wert haben. Zum Verstellen kann sowohl ein Verschiebemechanismus als auch beispielsweise ein Exzentermechanismus Anwendung finden, was hier nicht nähe erläutert zu werden braucht.

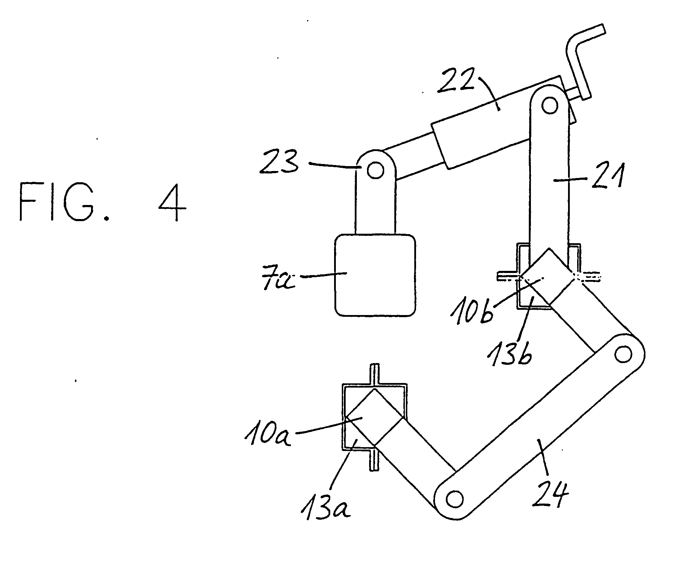

Figur 4 zeigt schematisch eine Anordnung zum gleichzeitigen Erzeugen der erforderlichen Vorspannung auf sämtliche Gummilager beider Querachsen. Dieser Vorspannmechanismus ist in den Figuren 2, 5 und 6 der Klarheit der Darstellung halber nicht eingezeichnet. Die beiden Querachsen sind wieder mit 10a und 10b bezeichnet, die Gummilager bzw. Gummigelenke zur Anlenkung der Tragrohre 9a bzw. 9b sind wieder mit 13a bzw. 13b bezeichnet. An der Querachse 10b ist ein Hebel 21 angeordnet, dessen freies Ende über eine längenverstellbare Zylinder- bzw. Spindeleinheit 22 mit einem am Rahmenrohr 7a der Säschiene 7 angeordneten festen Widerlager 23 verbunden ist. Durch entsprechende Einstellung der Kolben- bzw. Spindeleinheit 22 erfolgt eine entsprechende Verschwenkung des Hebels 21 und somit eine Drehung der Querachse 10b mit entsprechender Torsionsvorspannung jedes der Gummigelenke 13b. Über einen Parallelkurbelmechanismus 24 ist die Querachse 10a mit der Querachse 10b gekuppelt, so daß diese gleichzeitig mitgedreht wird und auch die Gummigelenke 13 a in gleicher Weise vorgespannt werden.

Bei der Anordnung nach Fig. 3 können die Federn 14 an einem verstellbaren gemeinsamen Widerlager eingehängt sein, um eine zentrale Einstellung der Vorspannung der Trägerrohre 9a, 9b zu ermöglichen. Statt Zugfedern sind auch Druckfedern möglich.

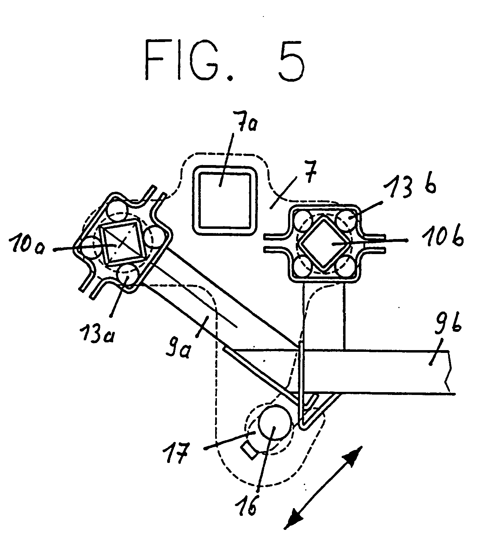

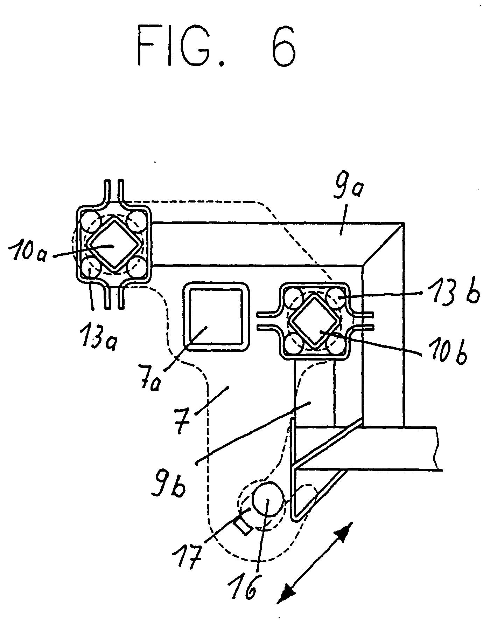

Während bei der Ausführungsform nach den Figuren 1 bis 3 die beiden Querachsen 10a und 10b höhenversetzt zueinander angeordnet sind, zeigen die Figuren 5 und 6 zwei weitere Ausführungsbeispiele der Erfindung mit abgewandelter Anordnung der Querachsen 10a und 10b derart, daß diese etwa auf gleicher Höhe angeordnet sind. Dabei sind die Schartragrohre 9a und 9b jeweils beide abgewinkelt. Sie wirken wiederum mit jeweils dem gleichen Anschlag 16 zur Tiefenbegrenzung zusammen.

Durch Anordnung der beiden Querachsen 10a und 10b vorderhalb bzw. hinterhalb des Rahmenrohrs 7a der Säschiene kann bei den Ausführungsformen nach den Figuren 5 und 6 gegebenenfalls eine etwas kürzere Gesamtbaulänge erreicht werden als bei der Ausführungsform nach den Figuren 1 bis 3.

Bei der Anordnung nach Figur 5 sind die beiden Querachsen 10a und 10b etwa in der gleichen Höhenposition angeordnet.

Bei der Anordnung nach Figur 6 sind die beiden Querachsen 10a und 10b etwas höhenversetzt, wobei die vordere Querachse 10a etwas höher als die hintere Querachse 10b angeordnet ist. Die Anordnung nach Figur 6, bei welcher die doppelt abgewinkelten Schartragrohre 9a oberhalb des Rahmenrohrs 7a der Säschiene verlaufen, bietet noch den Vorteil, daß die Schartragrohre bei Auftreten großer Hindernisse beliebig weit nach oben auslenken können, ohne an das Rahmenrohr 7a anzustoßen.

Die Einstellung der Arbeitstiefe der Säschareinheiten erfolgt, wie sich nun wieder aus Figur 1 ergibt, mittels eines auf den Gelenkrahmen 6, an dem die Säschiene 7 angeordnet ist, wirkenden Mechanismus. Dieser Mechanismus weist einen Winkelhebel 18 auf, der mittels eines Schraubspindelgetriebes 19 durch Verlängerung oder Verkürzung der Spindellänge schwenkbar ist und mit seinem auf die Säschiene 7 wirkenden Schenkel 20 eine Höhenverstellung der Säschiene und damit eine Veränderung der Arbeitstiefe bewirkt. Der Gelenkrahmen 6 bewirkt dabei jeweils eine Parallelführung, so dass die Orientierung der Säschiene 7 mit den Schareinheiten 8 jeweils gleich bleibt.

Das Ausheben der Schareinheiten erfolgt durch Anheben der gesamten Kombination mit dem Rahmen und dem Walzenwerk durch die Schlepperhydraulik.

Bei den Ausführungsbeispielen ist eine Anordnung mit zwei hintereinander angeordneten Säscharreihen und mit zwei Querachsen der Säschiene gezeigt und beschrieben worden. Es ist auch möglich, drei Reihen von Säscharen und dementsprechend drei Querachsen an der Säschiene vorzusehen. Die drei Querachsen hätten dann jeweils den gleichen Abstand in Längsrichtung der Sämaschine voneinander. Auch dann ist ein Zusammenwirken aller Tragrohre mit dem gleichen Anschlag 16 möglich, wobei die Tragrohre von den drei Querachsen unter jeweils verschiedenem Winkel angeordnete Anschlagarme zum Zusammenwirken mit dem Anschlag haben. Die Anschlagarme können durch das Tragrohr selbst, durch eine Verlängerung eines abgewinkelten Abschnittes, oder auch durch einen separaten Arm gebildet sein. Anzumerken ist in diesem Zusammenhang, daß die Tragrohre 9b und eventuell mit einer dritten Querachse verbundene Tragrohre (nicht dargestellt) nicht notwendigerweise winkelförmig verlaufen müssen, wie in den Figuren 1 bis 3 dargestellt, sondern auch geradlinig verlaufen können und separate Anschlagarme zum Zusammenwirken mit dem Anschlag haben können.

Bei den Ausführungsbeispielen ist der gemeinsame Anschlag 16 als eine durchgehende Querstange beschrieben worden, die zwecks Verstellung der Tiefenbegrenzung so verschiebbar ist, daß sich mit Bezug auf die Anschlagarme aller Säscharträger eine etwa gleichmäßige Verschiebedistanz ergibt. Stattdessen kann der gemeinsame Anschlag 16 auch durch eine Nockenwelle oder eine ähnliche Konstruktion gebildet sein, bei welcher die Verstellung zwecks Veränderung der Tiefenbegrenzung entweder durch Drehen oder durch Verschieben erfolgten kann.

## Patentansprüche

1. Säschiene mit mehreren Säscharen mit jeweils nachgeordneter Druckrolle, mit folgenden Merkmalen:
es sind mindestens zwei in Arbeitsrichtung hintereinander angeordnete Reihen von Säscharen (11a, 11b) in gestaffelter Anordnung mit jeweils nachgeordneter Druckrolle (12a, 12b) vorgesehen,
die Säschiene (7) weist mindestens zwei jeweils einer der Reihen von Säscharen zugeordnete Querachsen (10a, 10b) auf, an denen jede Säschar (9a bzw. 9b) der betreffenden Säscharreihe über einen länglichen Träger (9a, 9b) angelenkt ist, wobei eine die jeweilige aus Träger, Säschar und Druckrolle gebildete Einheit (8) nach unten drückende Vorspannung erzeugt wird,
die mindestens zwei Querachsen haben in Arbeitsrichtung einen Abstand voneinander, der etwa dem Abstand der beiden Säscharreihen entspricht, wobei die beiden Querachsen sich in der gleichen Höhenposition befinden oder relativ zueinander höhenversetzt positioniert sein können,
die mit den beiden Querachsen (10a, 10b) verbundenen Säscharträger (9a, 9b) wirken alle mit einem gemeinsamen Anschlag (16) zur Tiefenbegrenzung zusammen,
die mit den beiden Querachsen (10a, 10b) verbundenen Säscharträger (9a, 9b) wirken jeweils mit unter verschiedenen Winkeln verlaufenden Anschlagarmen mit dem gemeinsamen Anschlag (16) zusammen, wobei die Anordnung so getroffen ist, daß die Längendistanz jedes Anschlagarms von der betreffenenden Querachse (10a bzw. 10b) zur Anschlagstelle etwa gleich ist.

2. Säschiene nach Anspruch 1, wobei der gemeinsame Anschlag (16) zwecks Verstellung der Tiefenbegrenzung längs einer Bahn verschiebbar ist, die eine gleichmäßige Verschiebedistanz mit Bezug auf die Anschlagarme aller Säscharträger ergibt.

3. Säschiene nach Anspruch 1, wobei der gemeinsame Anschlag (16) durch eine Nockenwelle oder dergleichen gebildet ist, die durch Drehen oder Verschieben zwecks Veränderung der Tiefenbegrenzung so verstellbar ist, daß sich eine etwa gleiche Verstelldistanz mit Bezug auf die Anschlagarme sämtlicher Säscharträger ergibt.

4. Säschiene nach einem der Ansprüche 1 bis 3, wobei jeder Scharträger (9a, 9b) über ein mit Torsionsvorspannung ausgestattetes Gummigelenk (13a, 13b) mit der betreffenden Querachse verbunden ist.

5. Säschiene nach Anspruch 4, wobei die beiden Querachsen (10a, 10b) zwecks gemeinsamer Vorspannung der Gummigelenke (13a, 13b) über einen Parallelkurbelmechanismus (24) oder einen gleichwirkenden Mechanismus miteinander gekuppelt sind und eine (10b) der Querachsen mit einem Mechanismus (21, 22) zur Erzeugung einer Winkeldrehbewegung verbunden ist.

6. Säschiene nach einem der Ansprüche 1 bis 3, wobei jeder Scharträger (9a, 9b) über eine Zug- oder Druckfeder nach unten vorgespannt ist und zwecks gemeinsamer Vorspanneinstellung das allen Federn gemeinsame Federwiderlager verstellbar ist.

7. Säschiene nach einem der Ansprüche 1 bis 6, wobei die Höhe der Säschiene (7) über einen parallel führenden Gelenkrahmen (6) verstellbar ist.

## Claims

1. Seed bar with several sowing shares each with a following pressure roller, with the following features:
at least two rows of sowing shares (11a, 11b) are arranged staggered behind each other in the working direction, each with a following pressure roller (12a, 12b),
the seed bar (7) has at least two transverse shafts (10a, 10b) each allocated to one of the rows of sowing shares, on which shaft is hinged each sowing share (9a, 9b) of the share row concerned by way of a linear carrier (9a, 9b), where a pre-tension is generated that presses downward a unit (8) comprising the carrier, sowing share and pressure roller;
the at least two transverse shafts are spaced apart in the working direction by a distance corresponding approximately to the distance between the two rows of sowing shares, where the two transverse shafts can have the same height position or be positioned height-offset in relation to each other;
the sowing share carriers (9a, 9b) which are connected with the two transverse shafts (10a, 10b) all co-operate with a common stop (16) to limit the depth;
the sowing share carriers (9a, 9b) which are connected with the two transverse shafts (10a, 10b) with stop arms running at different angles each co-operate with a common stop (16), where the arrangement is such that the length distance of each stop arm from the transverse shaft concerned (10a or 10b) to the stop point is approximately the same.

2. Seed bar according to claim 1, where the common stop (16) is displaceable along a track for the purpose of adjustment of the depth limiter, which gives the same displacement distance in relation to all stop arms of all sowing share carriers.

3. Seed bar according to claim 1, where the common stop (16) is formed by a camshaft or similar which is adjustable by twisting or displacement to change the depth limit to give an approximately even adjustment distance in relation to the stop arms of all sowing share carriers.

4. Seed bar according to any of claims 1 to 3, where each share carrier (9a, 9b) is connected with the transverse shaft concerned with a rubber joint (13a, 13b) with torsion prestress.

5. Seed bar according to claim 4, where the two transverse shafts (10a, 10b) are coupled together for the purpose of common pre-tension of the rubber joints (13a, 13b) by way of a parallel crank mechanism (24) or a mechanism with similar effect, and one (10b) of the transverse shafts is connected with a mechanism (21, 22) to generate an angular twist movement.

6. Seed bar according to any of claims 1 to 3, where each share carrier (9a, 9b) is pre-tensioned downwards by way of a tension or compression spring and the spring counter bearing common to all springs is adjustable for the purpose of common pre-tension adjustment.

7. Seed bar according to any of claims 1 to 6, where the height of the seed bar (7) is adjustable by way of a parallel guide hinged frame (6).

## Revendications

1. Barre de semoir à plusieurs socs de semoir munis chacun d'un rouleau de pression placé en aval, possédant les caractéristiques suivantes :
il est prévu au moins deux rangées de socs de semoir (11a, 11b) disposées l'une en arrière de l'autre dans la direction du travail, dans une disposition décalée, avec à chaque fois un rouleau de pression (12a, 12b) placé en aval,
la barre de semoir (7) comporte au moins deux axes transversaux (10a, 10b) associés chacun à une des rangées de socs de semoir, auxquels chaque soc de semoir (9a ou 9b) de la rangée de socs de semoir correspondante est articulé par l'intermédiaire d'un support allongé (9a, 9b), cependant qu'une précontrainte est engendrée pour presser vers le bas chaque unité (8) formée d'un support, d'un soc de semoir et d'un rouleau de pression,
les au moins deux axes transversaux ont un écartement mutuel dans la direction du travail qui correspond à peu près à l'écartement des deux rangées de socs de semoir, les deux axes transversaux pouvant se trouver à la même position en hauteur ou être positionnés avec un décalage en hauteur l'un par rapport à l'autre,
les supports de socs de semoirs (9a, 9b) reliés aux deux axes transversaux (10a, 10b) coopèrent tous avec une butée commune (16) pour la limitation de la profondeur,
les supports de socs de semoir (9a, 9b) reliés aux deux axes transversaux (10a, 10b) coopèrent avec une butée commune (16), à chaque fois avec des bras de butée s'étendant sous différents angles, la disposition étant telle que la distance longitudinale de chaque bras de butée, entre l'axe transversal correspondant (10a ou 10b) et la zone de butée, est toujours à peu près égale.

2. Barre de semoir selon la revendication 1, dans laquelle la butée commune (16) peut coulisser, pour le réglage de la limitation de la profondeur, le long d'une piste qui donne une distance de translation constante par rapport aux bras de butée de tous les supports de socs de semoir.

3. Barre de semoir selon la revendication 1, dans laquelle la butée commune (16) est formée par un arbre à cames ou équivalent qui peut être réglé par rotation ou translation pour faire varier la limitation de profondeur, de telle manière qu'il en résulte une distance de réglage à peu près égale pour les bras de butée de tous les supports de socs de semoir.

4. Barre de semoir selon l'une des revendications 1 à 3, dans laquelle chaque support de socs (9a, 9b) est relié à l'axe transversal correspondant par l'intermédiaire d'une articulation en caoutchouc (13a, 13b) équipée d'une précontrainte de torsion.

5. Barre de semoir selon la revendication 4, dans laquelle, pour engendrer une précontrainte commune des articulations en caoutchouc (13a, 13b), les deux axes transversaux (10a, 10b) sont accouplés entre eux par l'intermédiaire d'un mécanisme à biellettes parallèles (24) ou d'un mécanisme équivalent et l'un (10b) des axes transversaux est relié à un mécanisme (21, 22) destiné à produire un mouvement de rotation angulaire.

6. Barre de semoir selon l'une des revendications 1 à 3, dans laquelle chaque support de socs (9a, 9b) est précontraint vers le bas par l'intermédiaire d'un ressort de traction ou de compression et la portée de ressort commune à tous les ressorts peut être réglée pour le réglage commun de la précontrainte.

7. Barre de semoir selon l'une des revendications 1 à 6, dans laquelle la hauteur de la barre de semoir (7) peut être réglée au moyen d'un châssis articulé (6) à guidage parallèle.
